# EUROPEAN PATENT APPLICATION

(11) **EP 2 116 298 A1**
(43) Date of publication of application: **11.11.2009**
(21) Application number: 07858290.5
(22) Date of filing: 05.12.2007
(51) Int. Cl.: B01J 20/32, G01N 21/79, B01D 24/04, C09B 26/02

(54) **PROCEDURE FOR THE FUNCTIONALIZATION OF A SUBSTRATE, FUNCTIONALIZED SUBSTRATE AND DEVICE CONTAINING SAME**

(30) Priority: 27.12.2006 ES 200603285
(71) Applicant: Consejo Superior De Investigaciones Científicases, 28006 Madrid (ES); Universidad de Murcia, 30003 Murcia (ES)
(72) Inventor: DÍEZ GIL, César, E-08193 Bellaterra (ES); RATERA BASTARDAS, Imma, E-08193 Bellaterra (ES); VECIANA MIRÓ, Jaume, E-08193 Bellaterra (ES); MARTÍNEZ, Rosario, E-30003 Murcia (ES); ZAPATA, Fabiola, E-30003 Murcia (ES); CABALLERO, Antonio, E-30003 Murcia (ES); TÁRRAGA, Alberto, E-30003 Murcia (ES); MOLINA, Pedro, E-30003 Murcia (ES)
(74) Representative: Urizar Anasagasti, José Antonio
(86) International application number: PCT/ES2007/070206
(87) International publication number: WO 2008/077985

(57) **Abstract**

The Invention relates to a method for functionalisation of a substrate starting from a molecular compound, wherein said substrate is a porous membrane, organic or inorganic and insoluble in aqueous medium, and said molecular compound is a functional compound, insoluble in aqueous medium and soluble in an organic solvent miscible in water, and said methos comprises preparing an aqueous suspension of nanoparticles of said functional molecular compound, where the size of said nanoparticles is equal or less than the pore size of said membrane, and filtering said suspension through said substrate, in such a way that said nanoparticles coalesce together and with the substrate so that both become closely joined. The invention also relates to the substrate thus obtained, use thereof and the devise containing same.

## Description

### TECHNICAL FIELD OF THE INVENTION

This invention relates to a method of obtaining a functionalised porous or fibrous solid substrate with the chemical and/or physical properties of a nano-structured molecular or polymer chemical compound which has them. With the method of this invention, it is possible to modify the properties of the starting substrate and obtain a new functionalised substrate.

The new substrate thus obtained has applications as an optical- and/or fluorescent-type chemical sensor, as a chemical sequestrator or as a modifier of the properties of a surface, making it, for example, superhydrophobic.

A preferred embodiment of the invention provides a chemical sensor obtained in accordance with the method of the invention, as well as the use thereof in sensor devices and the capacity for the selective detection of substances such as, for example, metallic ions or other ionic species present in an aqueous medium.

### BACKGROUND OF THE INVENTION

The coating of substrates in order to modify their properties for a given application has been known for a long time. Currently, there is a wide variety of methods related to the improvement and modification of the properties of substrates by modifying the surface thereof.

Below we include some of the techniques that make it possible to deposit substances on the surface of a substrate:
Surface modification by means of *physical vapour deposition* (PVD), which primarily consists of a coating process by evaporation, wherein a material is transferred atom by atom from the solid to the gas phase, and again to the solid phase, thereby gradually building a film on the substance that is to be coated. This technique has obvious advantages, such as the production of hard, resistant coatings, and is an ideal technique for inorganic coatings. If applicable, this method may be used to coat hard-to-access substrate areas, which would otherwise be very difficult to reach. There are variants of the *PVD* technique; the most widely known include: "ion plating", "ion beam" and "arc discharge evaporation". However, this method has certain significant deficiencies, such as, for example, the need to use high temperatures (the substance desgined to coat the substrate must be volatilised) and a vacuum (the entire process must be performed in a vacuum in order to prevent as much as possible contamination of the coating by substances present in air). Due to these working conditions, it is very difficult to treat organic substances, whether substrates or coatings, and, moreover, due to its complexity, numerous instruments and a qualified staff are required to use it, which entails a high cost.

Another similar technique is *chemical vapour deposition* (CVD). In this process, the substrate must be placed inside a reactor, where a number of gases are introduced that chemically react with one another, leading to a new solid compound that will be deposited on the substrate. The coatings obtained are highly homogeneous, but, as in the previous case, the applications are limited due to the high temperatures required (although in this case they are much lower than those used in PVD). Therefore, this method does not allow to perform organic coatings and/or treatment of substrates of this type. Moreover, as in the previous case, its use requires a qualified staff and costly instruments, and, therefore, the cost of the process is relatively high.

*Electrodeposition* is another technique used to coat surfaces. As the name implies, it is based on the use of an electrical current for the deposition of electro-active substances on the surface to be treated. Its use is therefore restricted to conductive materials and is applicable to obtain electrodes. The disadvantages include the limitation in the number of substances that may be coated (they must always be conductive substances) and used to coat (they must be substances that can be activated with an electrical current). This technique may be used for organic coatings provided that said compound conducts current. Two practical examples are patent applications WO2006023933 and WO2006028482*,* which disclose two different methods for the generation of coatings using electrodeposition-based techniques.

Another method used to generate coatings for solid substrates is *thermal oxidation.* This method is limited to materials that may be oxidised and the oxide whereof meets the desired characteristics (for example, passivation, electric insulation). The basis of the method is oxidation of the surface of the substrate to be treated. It is therefore essential that said modification grants the material the desired surface properties. The main disadvantages of this technique are its limited use, since it is only useful for inorganic compounds, and the need to use high temperatures (high cost). One of the most versatile techniques for the coating of surfaces is *casting*. This technique consists of depositing a solution of the substance intended to be used as coating on the substrate to be coated, either by means of a spray or by rotating the sample, such that a very homogeneous layer is formed. Once the solvent is evaporated, the coating is obtained. This is particularly useful for polymers and is particularly useful in the production of next-generation materials or materials related to the technology industry, such as silicon derivatives. Patent WO03078145 shows an example of the versatility of this coating technique, since in this case the coated surface are contact lenses, which are made of a very sensitive material that may not be coated by any of the above-mentioned techniques. However, it still requires using a complex system of devices to perform the deposition, which entails the need for a highly qualified staff, in addition to entailing a high economic cost.

There are other ways to modify surface properties, such as, for example, the incorporation of functional groups on the surface by co-polymerisation, as disclosed in the article Eur. Polym. J., 2006, 42, 1487, by authors L.N. Pilon, S.P. Armes, P. Findlay and S.P. Rannard, to obtain, for example, superhydrophobic cellulose surfaces.

The use of conventional techniques for the creation of materials with special properties is widely spread in the industry today; however, they have limited capacities. Despite the fact that many industries are attempting to overcome said limitations, there are also many others, such as the semiconductor industry, the biomaterials industry, new technologies, etc., that are committed to the development of a new concept of materials creation based on new technologies, such as nanotechnology.

One example of the use of nanoparticles to coat substrates is found in patent WO03/106573 A1*,* which discloses a method of coating substrates from transparent conductive nano-powder, to produce transparent, conductive nano-coatings. In addition to the nanoparticles, this method requires the use of additives, polymers or surfactants, which makes the coating process longer and more costly.

Consequently, there is still no technique available that makes it possible to functionalise substrates with certain characteristics, such as, for example, porous or fibrous substrates, in a simple, effective manner and at a low cost.

### BRIEF DESCRIPTION OF THE INVENTION

A first aspect of the invention provides a method for the functionalisation of a substrate from a molecular or polymer compound, where said substrate is an organic or inorganic porous membrane, insoluble in an aqueous medium, and where said molecular compound is a functional compound, insoluble in an aqueous medium and soluble in an organic compound miscible in water.

Advantageously, the method of the invention prevents the use of complex procedures for anchoring the molecular compound on solid surfaces, such as those described by Langmuir-Bloddget, or the use of external matrices, such as cross-linked polymers. In accordance with the first aspect of the invention, the method ensures the preservation of the properties that the molecular compound had in solution, directly functionalising the substrate thereon and without performing any chemical or physical modification of the participating substances.

Also advantageously, in accordance with the first aspect of the invention, a method is provided for the functionalisation of substrates that requires only small quantities of the molecular compound, which undoubtedly constitutes a very economical method.

Moreover, in accordance with the first aspect of the invention, the substrate may be as simple as a cellulose membrane, which is economical, biodegradable and renewable. Cellulose membranes have very good mechanical properties and are water absorbers.

In accordance with the first aspect of the invention, a method is provided which comprises:
i) preparing an aqueous suspension of nanoparticles of a functional molecular compound, where the size of the nanoparticles is equal to or smaller than the pore size of the substrate (porous membrane) and, subsequently,
ii) filtrating said aqueous suspension obtained in step i) through the substrate that is to be functionalised, such that said nanoparticles of the molecular compound coalesce on said substrate, the compound and the substrate remaining intimately bound.

A second aspect of the invention is to provide a functionalised substrate, where said molecular compound and said substrate are intimately bound after performing the method in accordance with the first aspect of the invention, to be used as a sensor.

In accordance with the second aspect of the invention, the functionalised substrate, also called composite, has applications for the selective detection of different substances, such as, for example, the detection of metallic ions or other ionic species, such as, for example, phosphates of biological interest present in an aqueous medium.

A third aspect of the invention is to provide a functionalised substrate obtained in accordance with the first aspect of the invention, to be used as a sequestrator agent.

A fourth aspect of the invention is to provide a device that comprises a functionalised substrate in accordance with the first aspect of the invention.

### FIGURES

Figure 1 shows a photograph of a functionalised mixed cellulose ester membrane with a functional organic compound in accordance with the invention.

It may be observed that the colour intensity throughout the membrane is constant, which indicates a high degree of uniformity of dispersion of the functional molecular compound on the surface of the membrane.

Figures 2a) and 2b) show two images of functionalised membranes with different quantities of nanoparticles of the functional molecular compound. In particular, they show two coatings obtained from the filtration of nanoparticles with a size ≤ 0.1 micrometres on a mixed cellulose ester membrane with a pore size of 0.1 micrometres and 47 millimetres in diameter.

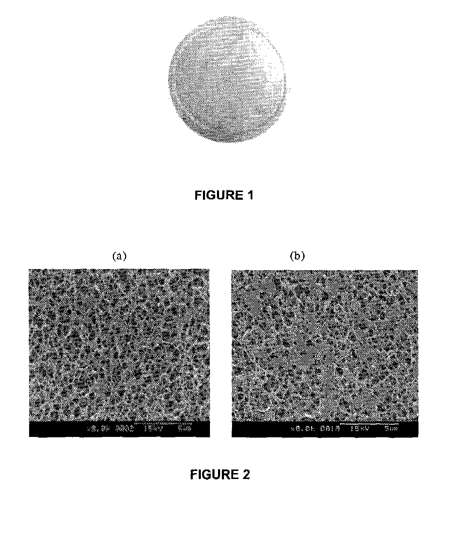

Figure 2a) shows a coating of the mixed cellulose ester membrane from the filtration of 5 ml of a suspension of nanoparticles of a compound of interest 100 nm in diameter.

Figure 2b) shows a coating of the mixed cellulose ester membrane from the filtration of 20 ml of a suspension of nanoparticles of a compound of interest 100 nm in diameter.

These images were obtained by scanning electron microscopy (SEM) following a process of metallisation of the membrane with a thin layer of gold in order to obtain a sample that was additionally conductive.

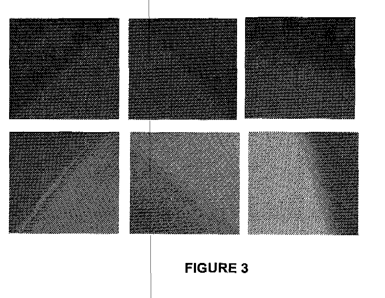

Figure 3 shows the change in luminescence of a membrane after filtrating 10 ml of a solution with different concentrations of mercury ions: a) ligand only, b) 10⁻⁶ M, c) 10⁻⁵ M, d) 10⁻⁴ M, e) 10⁻³ M, f) 10⁻² M (from top to bottom and from left to right).

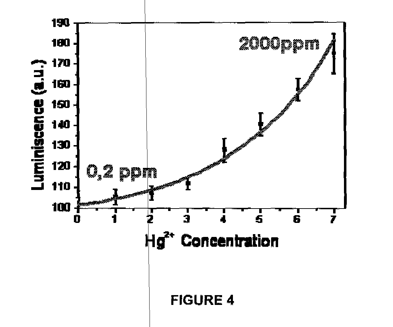

Figure 4 shows the change in luminescence of a membrane coated with a functional molecular compound (composite) after filtering a solution with different concentrations of mercury ions. The detection limit calculated for this reagent was in the range of ppb.

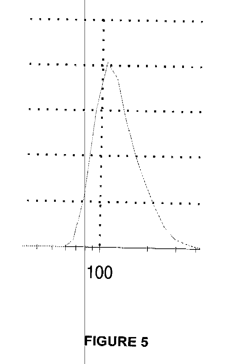

Figure 5 shows the intensity curve with respect to the size of an aqueous suspension of nanoparticles obtained by the Dynamic Light Scattering (DLS) technique.

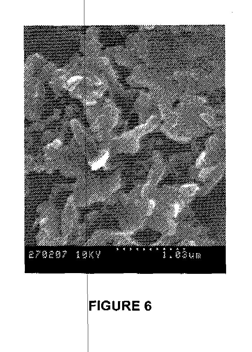

Figure 6 shows an SEM image of the nanoparticles' plate-form morphology.

### DETAILED DESCRIPTION OF THE INVENTION

The objective of this invention is to provide a technique that makes it possible to functionalise substrates with certain characteristics with nanoparticulate molecular or polymer compounds that have functional properties, such that said functional properties are incorporated into the substrate and, therefore, a new functionalised substrate, also called composite, is obtained.

With this invention, it is possible to provide an easy-to-apply, profitable technique that does not make any chemical or physical modifications of the substrate or the molecular compound, and uses only small quantities of the functional molecular compound.

In this invention, "molecular compound of interest or functional molecular compound" is understood to be any molecular compound which, due to its physical-chemical characteristics, has functional properties, is insoluble in an aqueous medium but soluble in an organic solvent miscible in water.

The most widely used organic solvents miscible in water include tetrahydrofuran, acetonitrile, ethanol, or mixtures thereof, although other organic solvents are also included within the scope of this invention.

The molecular compounds of interest or functional molecular compounds have particular physical-chemical properties, such as, for example, hydrophobicity, or opto-electronic or magnetic or chemical properties that make them useful as sensors, in particular, as optical- and/or fluorescent-type chemical sensors or sequestrators of ionic or molecular species.

In this invention, "substrate" is understood to be any organic or inorganic porous membrane that is insoluble in an aqueous medium. Optionally, said organic or inorganic porous membrane is made of fibres.

The most widely used substrates include natural or artificial organic-polymer-based membranes, the most widely known structures whereof are formed by cross-linked fibres, such as, for example, cellulose, nylon or polycarbonate.

In accordance with the invention, a method is provided for the functionalisation of porous or fibrous substrates starting from a functional molecular compound.

In particular, the invention consists of obtaining coatings of porous membranes starting from aqueous suspensions of nanoparticles of functional molecular compounds. Said suspensions are filtered through the porous substrate that is to be functionalised, and said membrane has a pore size of the same order of magnitude or greater than the size of the nanoparticles of the molecular compound in suspension.

Surprisingly, during the filtration, the nanoparticles in suspension coalesce along the membrane pores or, if applicable, the membrane fibres, thereby obtaining a perfect coating of the walls of the porous membrane, whilst maintaining its porous capacity and, therefore, making it possible to subsequently filter aqueous solutions without any difficulty in order to selectively detect or sequester certain chemical substances.

In accordance with the substrate functionalisation technique of this invention, it is not necessary to evaporate the sample (cases of PVD and CVD) or to apply a current (electrodeposition). Moreover, it is a very environmental-friendly technique, since the suspensions of nanoparticles are aqueous and, consequently, there is no waste from organic solvents in the process, which was not as obvious in the case of casting (where the entire process is performed in solution and the solvent has to be evaporated, with the consequent environmental problem, in addition to the economic cost of managing said waste).

Another advantage of the substrate functionalisation technique disclosed herein is that there is no need to use special instruments, since the invention may be implemented with only a vacuum pump and a stirrer. Moreover, it is also not necessary to use an additive or a fixing polymer.

The type of substrates (porous membranes) and coatings (molecular or polymer compounds) used in this invention are not suitable for the existing methods, due to the low volatility or the low resistance to temperature of the substrates or their non-conductive nature.

In turn, the coating obtained presents very good homogeneity and durability, since, upon filtering the suspension of nanoparticles, the latter melt, forming a new layer on the surface. In a preferred embodiment, said layer is cross-linked with the fibres that make up the membrane, leaving the membrane pores open for subsequent filtrations. Consequently, the surface area of the molecular compound of interest or functional molecular compound will be very large, thereby increasing the sensitivity toward other stimuli of a device that contains it for the application thereof (such as, for example, metallic ions or other ionic species, such as, for example, phosphates of biological interest).

After this coating, the functional organic compound is retained inside the membrane pores in the above-mentioned manner, and may not be easily eliminated. Due to its simplicity, the economic cost of said technique is very low and, therefore, it has high commercial interest.

In particular, the preparation of said aqueous suspension of nanoparticles comprises:
i-a) dissolving said functional molecular compound in an organic solvent miscible in water until a solution of at least 10^{-x} M is obtained, where x is between -1 and -5;
i-b) pouring at least 1 µl of said solution i-a) in the form of drops on thermostatised water under stirring, such that the functional molecular compound precipitates and, consequently, the suspension of nanoparticles is formed.

Advantageously, the size of the nanoparticles may be controlled by the thermostatisation and control of the stirring of the water whereto the drops of organic solution of our functional molecular compound are added. The ideal size of the nanoparticles must be of the same order of magnitude or slightly smaller than the pore size of the membrane that is to be coated; to this end, the temperature of the solution may be modified between 0°C and 100°C, with a rate of stirring greater than 500 rpm, preferably between 2,000 and 5,000 rpm.

The suspension of nanoparticles obtained from the functional molecular compound is filtered through the organic or inorganic porous membrane that is to be functionalised. Said filtration may be a gravity or overpressure filtration, or a filtration assisted by a vacuum-generation medium, water jet or vacuum pump, etc., with a filtration flow rate between 5 and 100 ml/min.

Therefore, in accordance with the first aspect of the method of the invention, a firm coating of a functional molecular compound will be formed on a porous membrane by a process of filtration of a suspension of nanoparticles, thereby obtaining a thin layer of the functional molecular compound not only on the surface of the substrate, but also to a given depth thereof.

During the filtration of the suspension of nanoparticles, a small penetration thereof takes place toward the interior of the membrane and, subsequently, the nanoparticles melt, forming a new layer on the surface which, in turn, is cross-linked with the fibres that form the membrane, leaving the membrane pores open for subsequent filtrations. Consequently, the functional molecular compound will have a maximum surface area, thereby increasing the sensitivity toward other stimuli of a device containing it for the application thereof (response to metallic ions or other ionic species, such as, for example, phosphates of biological interest).

Coating of the membrane takes place not only on the most superficial part of the membrane, but, due to the size of the filtered nanoparticles (s than the membrane pore size), the material may homogeneously penetrate through the pores a few hundreds of nanometres (between 100 and 1,000 nm), thereby providing the coating with a high degree of firmness and homogeneity.

It is worth mentioning that the membrane is prepared without any type of additives, such as coating polymers or modifiers that assist in fixing compounds on surfaces.

Moreover, it has been proven that even scratching with a finger or immersing the membrane in water, the coating may not be easily eliminated from the membrane, which is indicative of the firmness of the coating.

On the other hand, the load or concentration of the nanoparticles depends on the number of ml of suspension of nanoparticles filtered through the membrane, the minimum load being 10 ml of suspension of nanoparticles. Thus, the membrane's sensitivity toward external stimuli may be modified for the application thereof.

Therefore, in accordance with the first aspect, the filtered nanoparticles may go through the membrane pores, which are slightly smaller, and, subsequently, agglomerate, forming said coating of the fibres or pores. Therefore, once the nanoparticles are filtered, the molecular compound and the selected substrate will be intimately bound, due to the penetration and consequent cross-linking of the nanoparticles with the fibres or pores that compose the substrate and themselves.

Due to the size ratio between the nanoparticles and the membrane pores, the nanoparticles are firmly captured in the membrane. Surprisingly, it has been proven that over 99% of the nanoparticles are retained in the membrane, which makes it possible to control, in a very reliable manner, the concentration of the functional compound retained on the surface of the membrane.

There is a maximum load of functional molecular compound whereafter the coating of the membrane is excessive, which would entail full closing of the pores and, therefore, would not allow for its use as a membrane. The maximum coating depends on the size of the pores and the size of the nanoparticles used.

The penetration of the functional molecular compound through the membrane is less than 1 µm.

After performing the technique in accordance with the first aspect of the invention, a hybrid material (composite) is obtained, which is composed of a porous membrane with the walls of the pores coated with a functional compound on the most superficial part.

Another object of this invention is the use of said hybrid material or functionalised substrate in accordance with the technique disclosed herein as a sensor or sequestrator agent, as well as for the selective detection and signalling of a chemical substance.

Depending on the physical-chemical properties of the functional molecular compound, specialised membranes for specific uses may be prepared depending on the final application requirements, such as, for example, in the field of sensors of metallic ions or other ionic species, such as, for example, phosphates of biological interest.

### EMBODIMENT EXAMPLE OF THE INVENTION

In accordance with this invention, a method is provided for obtaining a specific sensor, the composite (hybrid material) generated that is explained below, and which has the characteristics of a sensor for mercury in water.

A sensor is understood to be a device that is capable of detecting manifestations of physical qualities or phenomena and, in turn, signalling this detection by providing physical, chemical or biological information about our environment.

### Example 1. Manufacturing of analytical test strips from organic sensor compounds for the detection of ppb of mercury in aqueous media

An actual application of the invention is described that is designed to obtain a selective sensor membrane for mercury ions, where the molecular compound of interest, X, used for the coating is 1-pyren-4-*p*-methoxyphenyl-2,3-diaza-1,3-butadiene and the porous membrane, Y, is a mixed cellulose ester.

### Compound of interest:

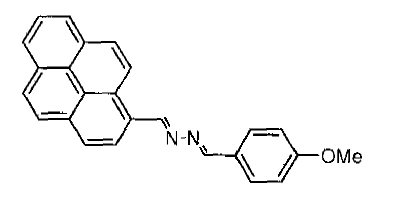

For the selective detection of mercury ions, said functional organic compound may be any derivative with aza bridges or similar, and with sensory, colorimetric or luminescent properties.

A 10⁻³ M (3.62 mg) solution of 1-pyren-4-*p*-methoxyphenyl-2,3-diaza-1,3-butadiene (X) is prepared. (Compound X selectively recognises mercury ions, forming a very stable mercury (II) complex, which leads to the increase in luminescence. This molecule has been synthesised in accordance with J. Am. Chem. Soc. 2005, 127, 15666.) 100 µl of said solution are added, drop by drop with a microsyringe, to 10 ml of ultra-pure water at ambient temperature under strong stirring (≥ 4,000 rpm). This instantaneously generates said suspension of nanoparticles of the sensor molecule for mercury ions.

This procedure leads to nanoparticles of the organic compound described above, 100 nm in size and very monodisperse.

Subsequently, the suspension is filtered through a mixed cellulose ester membrane (Advantech, 0.1 micrometres in pore size and 47 millimetres in diameter) by means of a vacuum filtration assembly, with a flow rate of 35 ml/min. The method of preparing the 10 ml of suspension and the filtration thereof are repeated 3 times, in order to obtain optimal coating of the membrane, as well as optimal operation of the membrane as a sensor for mercury ions in water. As a result, a composite (hybrid material: organic membrane - functional organic compound) is obtained that is highly homogeneous, as observed in Figure 1.

Once aqueous solutions with different concentrations of [Hg(ClO₄)₂] (from 10⁻⁸ M to 10⁻³ M) have been prepared, they are filtered through the previously prepared sensor membranes (we use one membrane for each mercury solution), using the same vacuum system and the same flow rate used to manufacture the sensor membranes.

Once the aqueous solutions with different concentrations of mercury ions have been filtered through the sensor membranes, their luminescence is measured, which provides an indication of the recognition of mercury ions.

The luminescence measurements are performed with a LEICA luminescence magnifying glass associated with a digital camera. In this way, digital images of the luminescence are obtained for each membrane (see Figure 3), which, once treated with a software, allow us to quantify the luminescence intensity in each of the membranes tested and, consequently, the ratio between the concentration of mercury present in the aqueous solution to be analysed and the luminescence of the membrane (see Figure 4).

This example shows the good coating of the membrane with the functional organic compound following the methodology claimed in this invention, as well as the good behaviour of the mercury sensor obtained, which may detect very small concentrations of mercury ions present in water (in the range of ppb).

For higher concentrations of mercury, these membranes may also be used as simple "dip test strips". In this case, the concentration of mercury may be determined by immersing the test strips coated with the sensor molecule in accordance with the invention in aqueous solutions of mercury ions, from the strip fluorescence measurement. Moreover, these test strips are permeable to water and, for this reason, water samples with only traces of metals may be enriched on the surface of the membrane by simple filtration, such that very low detection limits for mercury ions may be achieved.

The solution of the molecular sensor is unnoticeable for both the "dip test strip" and the filtration process, due to the firm retention of the molecular sensor in the membrane's fibrous network.

Analytical test strips such as those described in the examples of this invention offer a simple, convenient method for on-site analysis and daily water quality monitoring without the need to use complex, expensive equipment.

In sum, a mixed cellulose ester membrane has been firmly coated with a functional organic compound without the need for any additional matrix and the applicability thereof in the field of mercury sensors has been proven.

The key aspect of this method is its simplicity and applicability for a great variety of molecular compounds of interest, as well as for different types of membranes.

The coating of porous membranes with the method disclosed in this invention has allowed us to obtain a much greater surface area for the sensor and, therefore, to greatly increase the sensitivity of this system. Moreover, since these membranes are permeable to water, they allow us to detect concentrations of ionic species in the range of ppb.

## Claims

1. Method for the functionalisation of a substrate starting from a molecular or polymer compound, **characterised in that** said substrate is an organic or inorganic porous membrane insoluble in an aqueous medium, and said molecular compound is a functional compound that is insoluble in an aqueous medium and soluble in an organic solvent miscible in water, that comprises:
i) preparing an aqueous suspension of nanoparticles of said functional molecular compound, where the size of the nanoparticles is equal to or smaller than the pore size of said membrane, and, subsequently,
ii) filtering said aqueous suspension obtained in step i) through said substrate that is to functionalised, such that said nanoparticles of the molecular compound coalesce on the substrate, the compound and the substrate becoming intimately bound.

2. Method, as claimed in claim 1, **characterised in that**, in said step ii), a complete or partial coating of the fibres or walls of the pores of the substrate takes place, to a substrate depth of at least 100 nm.

3. Method, as claimed in claim 1, **characterised in that** said step i) of preparation of said aqueous suspension of nanoparticles comprises:
i-a) dissolving said functional molecular compound in an organic solvent miscible in water until a solution of at least 10^{-x} M is obtained, where x is between -1 and -5;
i-b) pouring at least 1 µl of said solution i-a) in the form of drops on thermostatised water under stirring, such that the functional molecular compound precipitates and, consequently, the suspension of nanoparticles is formed.

4. Method, as claimed in claim 3, **characterised in that** said organic solvent miscible in water is selected from tetrahydrofuran, acetonitrile, ethanol or mixtures thereof.

5. Method, as claimed in claim 3, **characterised in that**, in step i-b), the size of the nanoparticles is controlled.

6. Method, as claimed in claim 3, **characterised in that** the temperature of water is between 0°C and 100°C, and the rate of stirring is at least 500 rpm.

7. Method, as claimed in claim 1, **characterised in that** said filtration step ii) is performed by gravity, vacuum or overpressure filtration.

8. Method, as claimed in claim 1, **characterised in that** said filtration step ii) is performed at a filtration flow rate of between 5 ml/min and 100 ml/min.

9. Method, as claimed in claim 1, **characterised in that** said substrate is selected from an organic or inorganic material, or a natural or synthetic polymer.

10. Method, as claimed in claim 1, **characterised in that** said substrate exhibits a structure of cross-linked fibres.

11. Method, as claimed in claim 10, wherein said substrate is selected from cellulose, nylon and polycarbonate.

12. Method, as claimed in claim 10, **characterised in that** said substrate has a pore size equal to or smaller than 100 nm.

13. Functionalised substrate obtained in accordance with the method defined in any of the preceding claims as a sensor.

14. Functionalised substrate obtained in accordance with the method defined in any of the preceding claims as a sequestrator agent.

15. Use of a functionalised substrate, as claimed in claim 13, for the selective detection and signalling of a chemical substance.

16. Device that comprises a functionalised substrate, as claimed in claims 13 or 14.
